# EUROPEAN PATENT APPLICATION

(11) **EP 4 418 287 A1**
(43) Date of publication of application: **21.08.2024**
(21) Application number: 22906953.9
(22) Date of filing: 22.09.2022
(51) Int. Cl.: H01F 27/245, C21D 8/12, C22C 38/00, C22C 38/60, H01F 1/147

(54) **LAMINATED CORE**

(30) Priority: 14.12.2021 JP 2021202284
(71) Applicant: JFE Steel Corporation, Tokyo 100-0011 (JP)
(72) Inventor: OMURA, Takeshi, Tokyo 100-0011 (JP); ICHIHARA, Yoshihisa, Tokyo 100-0011 (JP); YOSHIZAKI, Souichiro, Tokyo 100-0011 (JP)
(74) Representative: Haseltine Lake Kempner LLP
(86) International application number: PCT/JP2022/035415
(87) International publication number: WO 2023/112418

(57) **Abstract**

A laminated core having good iron loss properties is provided.

A laminated core of the present invention includes a stack of pieces of an electrical steel sheet that have a predetermined shape resulting from processing. The electrical steel sheet includes an insulating coating on a surface. A frequency of formation of cracks propagating through the insulating coating in a region extending 100 um toward a middle of the electrical steel sheet from a processed edge of the electrical steel sheet is less than or equal to 3.0 times the frequency of formation of cracks propagating through the insulating coating in a region extending toward the middle of the electrical steel sheet from a position more than 100 um from the processed edge to a position 500 um from the processed edge, where the frequency is expressed as a number per mm.

## Description

### Technical Field

The present invention relates to a laminated core and, in particular, to a core for a transformer or a rotary machine that is produced by stacking pieces of an electrical steel sheet.

### Background Art

Cores for a transformer or a rotary machine are produced by processing an electrical steel sheet (electrical steel sheet coil) that serves as a base material into pieces having a predetermined shape that conforms to the shape of the core and subsequently stacking the processed pieces of the electrical steel sheet (material of the core) having the predetermined shape. Methods for the processing for providing pieces having a predetermined shape include punching, which is typically used in rotary machine applications, and beveling, which is typically used in transformer applications. In instances where a transformer or a rotary machine is produced with a laminated core including a stack of pieces of a material of a core processed by punching or beveling, a problem arises in that a variation in iron loss is large.

Techniques for reducing the variation in iron loss are disclosed in, for example, Patent Literature 1 to 3. Patent Literature 1 cites and focuses on strain that is introduced during processing, as being a possible cause of the variation in iron loss, and, accordingly, proposes a method that relieves plastic strain by annealing the workpiece after punching. Similar to Patent Literature 1, Patent Literature 2 also focuses on the strain and proposes a method that relieves the strain by shaving. Patent Literature 3 focuses on lamination accuracy and discloses a technique for controlling a shape of a steel sheet resulting from beveling; the shape is controlled to fall within a predetermined range to reduce a variation in the lamination accuracy.

### Citation List

### Patent Literature

PTL 1: Japanese Unexamined Patent Application Publication No. 7-298570
PTL 2: Japanese Unexamined Patent Application Publication No. 2011-217565
PTL 3: Japanese Unexamined Patent Application Publication No. 2014-86597

### Summary of Invention

### Technical Problem

Using any of the above-described techniques of the related art can improve the iron loss properties of laminated cores to some extent. However, there is still a need for further improvement in the properties.

The present invention has been made in view of the above-described circumstances, and an object of the present invention is to provide a laminated core having good iron loss properties.

### Solution to Problem

The present inventors closely analyzed a laminated core having a degraded iron loss. As a result, they found that short-circuiting due to destruction of insulation had occurred in or near a processed portion of the electrical steel sheet that served as a material of a core that constituted the laminated core and that the short-circuiting was a major cause of the increase in iron loss in the laminated core. The present inventors conducted a further investigation. Consequently, they found that the occurrence of short-circuiting is due to cracks propagating through an insulating coating in or near the processed portion and that limiting the formation of cracks can significantly improve the iron loss properties of laminated cores. It was also found that the degradation of iron loss due to short-circuiting is affected by an amount of voids present in or near the processed portion and that the amount of voids can be controlled by regulating an amount of shear droop that occurs on both sides of the electrical steel sheet as a result of processing.

The present invention was made based on the above-described findings. Specifically, primary features of the present invention are as follows.
[1] A laminated core including a stack of pieces of an electrical steel sheet that have a predetermined shape resulting from processing, the electrical steel sheet including an insulating coating on a surface, wherein a frequency of formation of cracks propagating through the insulating coating in a region extending 100 um toward a middle of the electrical steel sheet from a processed edge of the electrical steel sheet is less than or equal to 3.0 times the frequency of formation of cracks propagating through the insulating coating in a region extending toward the middle of the electrical steel sheet from a position more than 100 um from the processed edge to a position 500 um from the processed edge, where the frequency is expressed as a number per mm.
[2] The laminated core according to [1], wherein a total amount of shear droop on both sides of the electrical steel sheet due to the processing is less than or equal to 30% of a thickness of the electrical steel sheet.

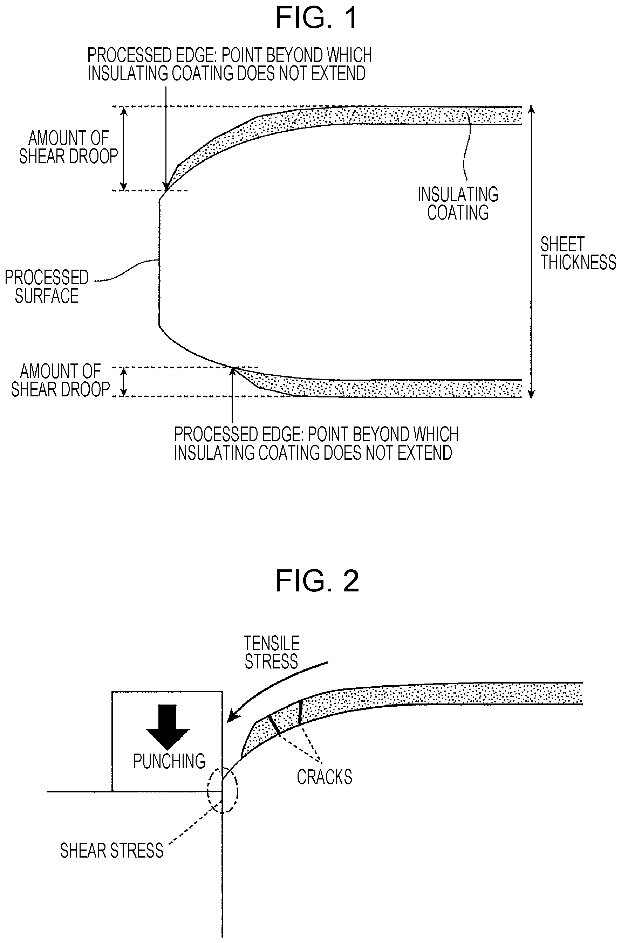

In the present invention, the "processed edge" is a point that is in a region at an end portion of a processed electrical steel sheet and beyond which an insulating coating does not extend, as illustrated in Fig. 1. The "amount of shear droop" is a distance in a thickness direction between the processed edge and a horizontal portion of a surface of the electrical steel sheet. The horizontal portion is sufficiently distant from the processed edge in a direction toward a middle of the electrical steel sheet.

### Advantageous Effects of Invention

The present invention can provide a laminated core having good iron loss properties. The present invention can significantly improve the iron loss properties of cores for rotary machines or transformers.

### Brief Description of Drawings

[Fig. 1] Fig. 1 is a diagram (schematic diagram) illustrating a processed edge of an electrical steel sheet and an amount of shear droop thereof.
[Fig. 2] Fig. 2 is a diagram (schematic diagram) illustrating cracks formed in an insulating coating.
[Fig. 3] Fig. 3 is a graph showing a relationship between [iron loss of core/iron loss of base material] and [frequency (number/mm) of crack formation in processed edge region/frequency (number/mm) of crack formation in region excluding processed edge].
[Fig. 4] Fig. 4 is a graph showing a relationship between [iron loss of core/iron loss of base material] and [total amount of shear droop on both sides of electrical steel sheet/thickness of electrical steel sheet]. Description of Embodiments

The present invention will be described in detail below.

The first key to the present invention is to inhibit the formation of cracks propagating through an insulating coating (hereinafter also referred to simply as "cracks") in a region at or near a processed edge of an electrical steel sheet that serves as a material of a core. The formation of cracks is a major cause of degradation of iron loss properties. The formation of cracks during punching, which is a common processing method, occurs as follows. A shear stress associated with the processing causes a region at or near a portion being processed to be pulled, and the tensile stress causes the insulating coating to be pulled. When the stress can no longer be withstood, cracks are formed (Fig. 2) .

In the case of processing that uses a blade, such as punching or beveling, the tensile stress, which is the cause of the formation of cracks, can be regulated by adjusting the processing conditions; however, appropriate conditions continuously change because there is an influence of, for example, wear of the blade. Accordingly, it is preferable to select a processing method that can avoid as much as possible the generation of stress in or near the portion being processed, rather than to select processing that uses a blade.

A specific example of the processing method that can avoid the generation of stress in or near the portion being processed is a processing method that utilizes a shock wave. Generating a shock wave requires forming a plasma on the surface of the steel sheet that serves as the workpiece to which the processing is applied. For this reason, in an instance where the processing is performed with a continuous laser or a short pulsed laser having a pulse width of a nanosecond or more, the laser beam is to be applied to the workpiece (steel sheet) in water or in a state in which a water film is present on the surface of the steel sheet (workpiece). Consequently, the water inhibits the expansion of the plasma, thereby enabling the generation of a shock wave. It is preferable that the method just described or the like be used for the processing; however, the method is not the only possible method, and it is possible to employ a method in which, for example, the processing of the related art that uses a blade is controlled frequently and with high precision.

Processing was performed in which a continuous wave laser (continuous laser) beam was applied to a workpiece (an electrical steel sheet that served as a base material) in water to generate a shock wave. Accordingly, pieces of the electrical steel sheet (material of a core) having a predetermined shape were prepared. As used herein, the expression "processing to provide pieces having a predetermined shape" means that the electrical steel sheet that serves as the base material is processed into pieces having a shape that conforms to the shape of the core that is to be produced. Furthermore, other electrical steel sheets (materials of a core) having different amounts of crack formation were prepared by processing workpieces (electrical steel sheets that served as the base materials), which had different coating adhesion properties of the insulating coating, into pieces having a predetermined shape. The laser irradiation conditions used were the same. For comparison, other electrical steel sheets (materials of a core) were prepared by using punching, which is a conventional method that uses a blade, to process workpieces (electrical steel sheets that served as the base materials) into pieces having a predetermined shape. In addition, the pieces of the respective materials of a core were stacked to form cores. The conditions used were the same except for the conditions mentioned above.

An iron loss of each of the cores and the iron loss (iron loss of the base material) of each of the electrical steel sheets that served as the materials of the cores were measured. Then, the ratio between them (iron loss of core/iron loss of base material) was determined. Furthermore, a frequency (number/mm) of formation of cracks propagating through the insulating coating in a region extending 100 um toward a middle of the electrical steel sheet that served as the material of the core, from the processed edge of the electrical steel sheet, was measured, and the frequency (number/mm) of formation of cracks propagating through the insulating coating in a region extending toward the middle of the electrical steel sheet from a position more than 100 um from the processed edge to a position 500 um from the processed edge was measured. Then, the ratio between them was determined. Note that the expression "toward a middle of the electrical steel sheet" refers to a direction (normal direction) that is perpendicular to a processing direction (cutting-plane line) at the processed edge and is on the steel-sheet-side with respect to the processed edge. Furthermore, the "region extending 100 um toward a middle of the electrical steel sheet that serves as the material of the core, from the processed edge of the electrical steel sheet" is hereinafter also referred to as a "processed edge region". Furthermore, the "region extending toward the middle of the electrical steel sheet from a position more than 100 um from the processed edge of the electrical steel sheet to a position 500 um from the processed edge" is also referred to as a "region excluding the processed edge".

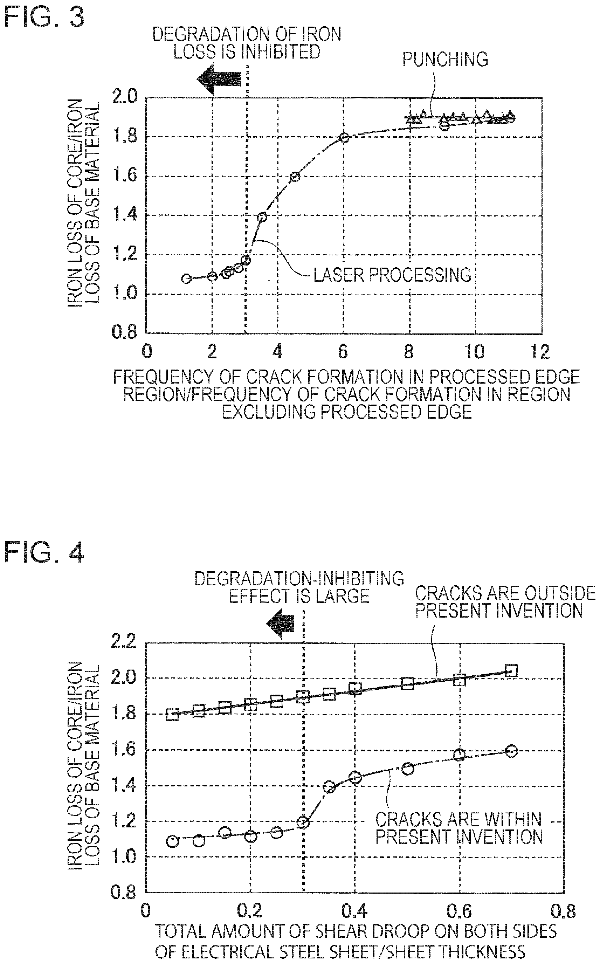

Fig. 3 shows a relationship between [iron loss of core/iron loss of base material] and [frequency (number/mm) of crack formation in processed edge region/frequency (number/mm) of crack formation in region excluding processed edge], which were determined as described above.

The frequency of crack formation was determined as follows. In a cross section (thicknesswise cross section) perpendicular to a processed surface, 50 sites in a region extending 500 um toward the middle of the electrical steel sheet from the processed edge were observed with an optical microscope. On both sides (top and bottom sides) of the electrical steel sheet, the number of cracks in the processed edge region (region extending 100 um toward the middle of the electrical steel sheet from the processed edge) was counted, and the number of cracks in the region excluding the processed edge (region extending toward the middle of the electrical steel sheet from a position more than 100 um from the processed edge to a position 500 um from the processed edge) was counted. The number of cracks per unit length was calculated from each of the counted numbers of cracks. For each of the regions, the calculated numbers were averaged (arithmetically averaged), and the result was designated as the frequency of crack formation of the region. The observation of the 50 sites was carried out by observing, with an optical microscope, the cross section of randomly selected 50 sites of observation samples in which cross-sectional observation, as illustrated in Fig. 1, was possible. The samples were cut from the materials of a core that had undergone the processing under the same conditions. For the observation, each of the samples was embedded in a resin mold to prevent changes in the state of the insulating coating. The sample was embedded in an orientation that allowed the cross section of the sample to be observed. Then, the cross section of the sample embedded in the resin mold was polished to reduce the thickness by 5 mm or more, to observe a site distant from the cut surface (a site that was not affected by the cutting). The distances from the processed edge toward the middle of the electrical steel sheet are distances in a horizontal direction (a direction perpendicular to a thickness direction in the cross section to be observed) from the processed edge. Regarding the ratio (base material of core/iron loss of base material) between the iron loss of the core and the iron loss (iron loss of the base material) of the electrical steel sheet that serves as the material of the core, having a low value of the ratio means that an increase in iron loss that occurs in association with the preparation of the core is inhibited. The results (Fig. 3) indicate that when the frequency (number/mm) of crack formation in the region extending 100 um from the processed edge of the material of the core was less than or equal to 3.0 times the frequency (number/mm) of crack formation in the region excluding the processed edge, degradation of the iron loss properties of the core was significantly inhibited. In contrast, in the electrical steel sheets (materials of the core) processed by punching, a large number of cracks were formed in the processed edge region under all of the conditions, which means that laminated cores having good iron loss properties could not be obtained.

The second key to the present invention is to control the amount of shear droop. Cores are formed by stacking pieces of an electrical steel sheet resulting from processing. Having a high value of the amount of shear droop of an electrical steel sheet that serves as the material of a core means that an amount of deformation of the steel sheet due to the processing is large. When the amount of deformation is large, the amount of processing-induced strain that is introduced into the steel sheet is large, and, therefore, the resulting core has a degraded iron loss. On the other hand, when the amount of shear droop of the steel sheet is increased, void portions in the stacked layers of the stack of the pieces of the steel sheet are increased, and, consequently, an increase in iron loss due to short-circuiting associated with the formation of cracks in the processed edge region is inhibited. Accordingly, the effect of inhibiting degradation of the iron loss of the core achieved by the inhibition of the formation of cracks in the processed edge region is reduced. The condition under which the effect of the present invention can be maximized is a condition in which the amount of shear droop is small so that degradation of iron loss due to introduced strain is inhibited. In this instance, short-circuiting occurs when a condition of the present invention is not applied, that is, when an electrical steel sheet in which the frequency of crack formation in the processed edge region is greater than 3.0 times the frequency of crack formation in the region excluding the processed edge is used. Consequently, the smaller the amount of shear droop of the steel sheet, the smaller the amount of the strain that is introduced, but the more significant the degradation of the iron loss of the core because of the influence of short-circuiting. In contrast, when the condition of the present invention is applied, that is, when an electrical steel sheet in which the frequency of crack formation in the processed edge region is less than or equal to 3.0 times the frequency of crack formation in the region excluding the processed edge is used, prevention of short-circuiting, as well as a reduction in the strain that is introduced, is realized. Consequently, as the amount of shear droop of the steel sheet decreases, the degradation of the iron loss of the core gradually becomes less significant, and as a result, a core having a low iron loss and a small variation in iron loss can be obtained. Processing that utilized a shock wave was performed as follows. A microsecond pulsed laser was used, with water being present on a surface of the workpieces. In the processing, various laser outputs were used so that electrical steel sheets having different amounts of processing-induced shear droop of both sides could be obtained. In the instance where an electrical steel sheet in which the frequency of crack formation in the processed edge region was within the range of the present invention was used, the effect of inhibiting degradation of the iron loss of the core could be observed regardless of the amount of shear droop; however, it was found that the effect of inhibiting degradation of the iron loss was maximized when the amount of shear droop was within a range of 30% or less of a thickness of the electrical steel sheet (Fig. 4). The electrical steel sheets used for comparison, in which the frequency of crack formation in the processed edge region was outside the range of the present invention, was prepared by punching that used a blade.

Now, a laminated core of the present invention will be described in detail.

A laminated core of the present invention is constructed by stacking pieces of an electrical steel sheet (material of the core) having a predetermined shape resulting from processing. For transformer applications, a yoke and legs are included, and for rotary machine applications, a rotor portion and a stator portion are included. In the laminated core, when the frequency (number/mm) of crack formation in the region (processed edge region) extending 100 um from the processed edge of the electrical steel sheet that serves as the material of the core is greater than 3.0 times the frequency (number/mm) of crack formation in the region extending from a position more than 100 um from the processed edge to a position 500 um from the processed edge (region excluding the processed edge), short-circuiting occurs in an end portion of the laminated core, which results in degradation of iron loss properties of the laminated core. Accordingly, it is important to ensure that, in the electrical steel sheet that serves as the material of the core, the frequency of crack formation in the processed edge region is less than or equal to 3.0 times the frequency of crack formation in the region excluding the processed edge. More preferably, the former frequency is less than or equal to 2.0 times the latter frequency. The lower limit is not particularly restricted, and the frequency of crack formation in the processed edge region may be 0 times the frequency of crack formation in the region excluding the processed edge.

Furthermore, when the total amount of processing-induced shear droop on both sides (top and bottom sides) of the electrical steel sheet is greater than 30% of the thickness of the electrical steel sheet, voids between the stacked layers increase, and, consequently, an amount of magnetic flux that is transferred in the stacking direction of the laminated core is reduced because of short-circuiting. As a result, the effect of the present invention of reducing iron loss achieved by limiting the number of cracks that are formed in the processed edge region of the electrical steel sheet is reduced. Accordingly, in terms of maximizing the effect of the present invention, it is preferable that the total amount of shear droop on both sides of the electrical steel sheet be less than or equal to 30% of the thickness of the electrical steel sheet. More preferably, the total amount is less than or equal to 20%. The total amount of shear droop may be 0 (0% of the thickness of the electrical steel sheet). Note that even when the total amount of shear droop is greater than 30% of the thickness of the electrical steel sheet, the effect of inhibiting degradation of the iron loss achieved by limiting the number of cracks in the processed edge region of the electrical steel sheet can be produced; accordingly, laminated cores produced with such an electrical steel sheet, in which the total amount of shear droop is greater than 30% of the thickness of the electrical steel sheet, still fall within the scope of the present invention.

Preferably, the frequency of crack formation in the processed edge region is less than or equal to 60 (number/mm), and more preferably, less than or equal to 30 (number/mm). The frequency of crack formation in the processed edge region may be 0 (number/mm).

The electrical steel sheet used in the present invention may either be a grain-oriented electrical steel sheet or a non-oriented electrical steel sheet. Typically, a non-oriented electrical steel sheet is used for cores for a rotary machine, and a grain-oriented electrical steel sheet is used for cores for a transformer; however, there are exceptions, and, therefore, there are no limitations regarding which of the electrical steel sheets should be used.

There are also no particular limitations regarding a composition of the electrical steel sheet. For example, a composition known in the art may be employed. Preferred compositional ranges of the grain-oriented electrical steel sheet will be described below.

Si: 2.0 to 8.0 mass%
Si is an element effective for increasing the electrical resistance of the steel, thereby reducing iron loss. When a Si content is 2.0 mass% or greater, the effect of reducing iron loss is sufficiently increased. On the other hand, when the Si content is greater than 8.0 mass%, workability is significantly reduced, and a magnetic flux density also tends to be reduced. Accordingly, it is preferable that the Si content be within a range of 2.0 to 8.0 mass%.

Mn: 0.005 to 1.0 mass%
Mn is an element necessary for improving hot workability. When a Mn content is less than 0.005 mass%, an effect of the addition is not sufficiently produced. On the other hand, when the Mn content is greater than 1.0 mass%, the magnetic flux density of the electrical steel sheet tends to be reduced. Accordingly, it is preferable that the Mn content be within a range of 0.005 to 1.0 mass%.

At Least One Selected from Ni: 0.03 to 1.50 mass%, Sn: 0.01 to 1.50 mass%, Sb: 0.005 to 1.50 mass%, Cu: 0.03 to 3.0 mass%, P: 0.03 to 0.50 mass%, Mo: 0.005 to 0.10 mass%, and Cr: 0.03 to 1.50 mass%

Ni is an element useful for improving a microstructure of a hot rolled steel sheet, thereby improving the magnetic properties. When a Ni content is less than 0.03 mass%, however, the effect of improving the magnetic properties is not significantly produced. On the other hand, when the Ni content is greater than 1.50 mass%, secondary recrystallization may be unstable, which tends to degrade the magnetic properties. Accordingly, in instances where Ni is included, it is preferable that the Ni content be within a range of 0.03 to 1.50 mass%.

Furthermore, Sn, Sb, Cu, P, Mo, and Cr are elements useful for improving the magnetic properties. For all of these elements, when the content is less than the above-described lower limit of the component, the effect of improving the magnetic properties is not significantly produced; on the other hand, when the content is greater than the above-described upper limit of the component, the growth of the secondary recrystallization grains is impaired. Accordingly, for all of these elements, the above-described content ranges are preferable when the elements are included.

Preferably, the balance is Fe and incidental impurities. Preferably, components other than the components described above are present in as small an amount as possible.

Now, preferred compositional ranges of the non-oriented electrical steel sheet will be described.

Si, Al, Mn, and P may be included. In this case, electrical resistance can be increased, and, consequently, a further reduction in iron loss can be achieved without compromising the spirit of the present invention. It is preferable that Si be present in an amount of 0.5 mass% or greater, Al in an amount of 0.1 mass% or greater, Mn in an amount of 0.05 mass% or greater, and P in an amount of 0.01 mass% or greater, so that the effect of reducing iron loss can be produced to a greater degree. On the other hand, adding these elements in large amounts degrades workability, and, accordingly, the upper limits of the contents of these elements preferably are Si: 6.5 mass%, Al: 3.0 mass%, Mn: 3.0 mass%, and P: 0.5 mass%. Note that the effects of the present invention can be sufficiently produced even when these elements are not added, and, therefore, the contents may be Si: less than 0.5 mass%, Al: less than 0.1 mass%, Mn: less than 0.05 mass%, and P: less than 0.01 mass%.

Furthermore, in addition to the components described above, Sb, Sn, and Cr, which are known as elements that improve magnetic properties, may be added alone or in a combination of two or more. Contents of these elements preferably are Sn: 0.5 mass% or less, Sb: 0.5 mass% or less, and Cr: 5.0 mass% or less. A reason for the preference is that the effect of improving magnetic properties no longer increases even when the elements are added in amounts greater than the mentioned content ranges, and that, therefore, an effective effect of improving magnetic properties cannot be expected to be achieved, that is, it is impossible to produce a magnetic-properties-improving effect that is commensurate with the increase in alloying cost.

Preferably, the balance is Fe and incidental impurities. Preferably, components other than the components described above are present in as small an amount as possible.

The electrical steel sheet used in the present invention includes an insulating coating on a surface (top and bottom sides). The insulating coating is not particularly limited for either the grain-oriented electrical steel sheet or the non-oriented electrical steel sheet and may be, for example, an insulating coating known in the art.

An example of an insulating coating for the grain-oriented electrical steel sheet is an insulating coating made up of a forsterite coating and a tension coating. The forsterite coating may primarily include MgO, and the tension coating may include, as a major component, magnesium phosphate or aluminum phosphate. Another example is an insulating coating made up of a ceramic coating formed of a nitride, a carbide, or a carbonitride, which may be formed by physical vapor deposition or chemical vapor deposition.

An example of an insulating coating for the non-oriented electrical steel sheet is a composite insulating coating primarily made of an inorganic material and further including an organic material. For example, the composite insulating coating is an insulating coating in which at least one inorganic material is present as a major component, and a particulate organic resin is dispersed. Examples of the inorganic material include metal salts, such as metal chromate salts and metal phosphate salts; colloidal silica; Zr compounds; and Ti compounds.

It is preferable that the insulating coating have a thickness of greater than or equal to 1 um, from the standpoint of increasing resistance to cracking. This is because when the thickness is large, the insulating coating has a large cross section, and, consequently, the stress exerted per unit area is reduced. However, when the thickness of the insulating coating is excessively large, a stacking factor is reduced. Accordingly, it is preferable that the thickness of the insulating coating be less than or equal to 10 um. In the material of the core, the thickness of the insulating coating is a thickness of the insulating coating at a position sufficiently distant from the processed edge in the direction toward the middle of the electrical steel sheet and at which the surface of the electrical steel sheet is horizontal.

The electrical steel sheet that serves as the material of the core that constitutes the laminated core may be manufactured with any method. By adjusting the controlling parameters of the manufacturing method, control can be made to achieve the ranges of the present invention. A preferred method is a processing method that uses a shock wave that is generated by applying a laser beam to the portion being processed of the steel sheet, in water or in a state in which a water film is present on the surface of the steel sheet (workpiece). The laser beam may be a laser beam having a pulse width of a nanosecond or more (or a continuous wave laser beam). The use of a shock wave minimizes the stress that is introduced into the portion being processed. Consequently, a tendency for crack formation in the processed edge region is reduced, and a tendency for the occurrence of shear droop is reduced. Furthermore, searching for laser irradiation conditions is easy, which makes stable processing possible. Note that even with different processing that has been used in the related art, such as punching or beveling, it is possible to control the frequency of crack formation in the processed edge region and the amount of shear droop such that they fall within the ranges of the present invention, provided that the control parameters are controlled frequently and with high precision. Accordingly, the method is not limited to the processing method that uses a laser. Note that the "nanosecond pulsed laser" is a laser having a pulse width of 1 nanosecond or more and less than 1000 nanoseconds, and the "microsecond pulsed laser" is a laser having a pulse width of 1 microsecond or more and less than 1000 microseconds.

An example of a method for manufacturing the laminated core of the present invention is a method for manufacturing a laminated core including a step (processing step) and a lamination step. In the step (processing step), an electrical steel sheet including an insulating coating on a surface (electrical steel sheet that serves as the base material) is processed into pieces having a predetermined shape. In the lamination step, the pieces of the electrical steel sheet (material of the core) having a predetermined shape resulting from the step are stacked to form the laminated core. In the processing step, processing is performed on the electrical steel sheet that serves as the base material, such that the frequency (number/mm) of formation of cracks propagating through the insulating coating in a region extending 100 um toward the middle of the electrical steel sheet from the processed edge can be less than or equal to 3.0 times the frequency (number/mm) of formation of cracks propagating through the insulating coating in a region extending toward the middle of the electrical steel sheet from a position more than 100 um from the processed edge to a position 500 um from the processed edge. Furthermore, in the processing step, it is preferable that the processing be performed on the electrical steel sheet that serves as the base material, such that the total amount of shear droop on both sides of the processed electrical steel sheet can be less than or equal to 30% of the thickness of the electrical steel sheet.

### EXAMPLES

### (Example 1)

A steel slab was manufactured by continuous casting. The steel slab had a chemical composition containing C: 0.05 mass%, Si: 4.2 mass%, Mn: 0.05 mass%, Ni: 0.03 mass%, Al: 200 mass-ppm, N: 85 mass-ppm, Se: 100 mass-ppm, and S: 5 mass-ppm, with the balance being Fe and incidental impurities. The steel slab was heated to 1480°C. Subsequently, the steel slab was subjected to hot rolling to form a hot rolled steel sheet having a thickness of 2.6 mm, and thereafter, the hot rolled steel sheet was subjected to hot band annealing at 1200°C for 120 seconds. Thereafter, the resulting steel sheet was cold rolled to have an intermediate thickness of 1.0 mm and was then subjected to intermediate annealing under the conditions of a degree of oxidation PH₂O/PH₂ of 0.36, a temperature of 1000°C, and a duration of 60 seconds. Subsequently, the resulting steel sheet was pickled with hydrochloric acid to remove subscale from the surface and thereafter subjected again to cold rolling to form a cold rolled steel sheet having a thickness of 0.27 mm.

Thereafter, decarburization annealing was performed in which the steel sheet was held at a soaking temperature of 830°C for 60 seconds with a degree of oxidation PH₂O/PH₂ of 0.50. Subsequently, an annealing separator containing MgO as a major component was applied, and final annealing for achieving secondary recrystallization, forming a forsterite coating, and achieving purification was performed under the conditions of 1250°C and 100 hr. Thereafter, a coating liquid for forming a tension coating was applied, and thereafter, the resultant was baked at 900°C, to form an insulating coating formed of a forsterite coating and a tension coating. The coating liquid was made of colloidal silica and aluminum phosphate and had a concentration of 60 mass%. The baking process doubled as flattening annealing. In the manner described above, an electrical steel sheet (electrical steel sheet coil) that served as the base material was prepared.

Subsequently, a sample for evaluating an iron loss property of the base material was taken from the electrical steel sheet coil prepared as described above, and the sample was subjected to stress relief annealing at 800°C for 3 hours. Subsequently, the iron loss property of the base material was evaluated in accordance with JIS C 2550. In parallel with the evaluation of the iron loss property of the base material, processing was performed on the prepared coil to form pieces that conformed to the shape of a core for a transformer, and then, the processed pieces of the electrical steel sheet (material of the core) having a predetermined shape were stacked. In this manner, a 1000 kVA three-phase three-legged transformer core with a core weight of 800 kg was produced. Primary and secondary windings were wound around the three legs. The transformer (laminated core) was then excited at 1.7 T and 50 Hz with a phase shift of 120° to measure the iron loss of the transformer.

The processing of the material of the core was performed in water with a laser. The laser used was a single-mode fiber laser that emitted a continuous wave, and the beam diameter of the laser was 80 um. The laser output was varied over a range of 0.5 to 5 kW, and the processing speed was varied over a range of 5 mpm to 50 mpm. Specific laser outputs and processing speeds are shown in Table 1. Regarding the processed material of the core (electrical steel sheet), the frequencies of crack formation in the processed edge region and the region excluding the processed edge and the total amount of shear droop on the top and bottom sides of the material of the core (electrical steel sheet) were evaluated in the manner described above.

The results are shown in Table 1. In Nos. 1, 4, 5, 6, 9, and 11, the ratio of crack formation was within the range of the present invention, and the ratio of the amount of shear droop on both sides of the electrical steel sheet was within a preferred range of the present invention; it can be seen that the degradation of the iron loss of the laminated core formed of the material of the core was inhibited. In Nos. 3, 8, and 10, the ratio of crack formation was outside the range of the present invention, and as a result, the degradation of the iron loss was very significant. In Nos. 2 and 7, the ratio of the amount of shear droop was outside a preferred range, whereas the ratio of crack formation was within the range of the present invention. In Nos. 2 and 7, the ratio of an increase in iron loss was greater than that of those in which the ratio of crack formation was within the range of the present invention and in which the ratio of the amount of shear droop was within a preferred range of the present invention. It can be seen, however, that in Nos. 2 and 7, the ratio of an increase in iron loss was lower than that of those in which the ratio of crack formation was outside the range of the present invention.

**[Table 1]**

| No. | Laser output (KW) | Processing speed (mpm) | Frequency of crack formation in processed edge region (number/mm) ^{*1} | Frequency of crack formation in region excluding processed edge (number/mm) ^{*2} | Ratio of crack formation ^{*3} | Total amount of shear droop ^{*4} (µm) | Ratio of amount of shear droop ^{*5} (%) | Iron loss of base material (W/kg) | Iron loss of laminated core (W/kg) | Ratio of increase in iron loss ^{*6} | Notes |
|---|---|---|---|---|---|---|---|---|---|---|---|
| 1 | 0.5 | 5 | 20 | 11 | 1.8 | 30 | 11 | 0.9 | 1.05 | 1.17 | Example |
| 2 | 1.0 | 5 | 35 | 12 | 2.9 | 86 | 32 | 0.9 | 1.25 | 1.39 | Example |
| 3 | 1.5 | 5 | 30 | 9 | 3.3 | 100 | 37 | 0.9 | 1.40 | 1.56 | Comparative Example |
| 4 | 2.0 | 30 | 22 | 16 | 1.4 | 5 | 2 | 0.9 | 1.06 | 1.18 | Example |
| 5 | 2.5 | 35 | 12 | 8 | 1.5 | 10 | 4 | 0.9 | 1.08 | 1.20 | Example |
| 6 | 3.0 | 35 | 16 | 10 | 1.6 | 3 | 1 | 0.9 | 1.06 | 1.18 | Example |
| 7 | 3.5 | 5 | 32 | 11 | 2.9 | 100 | 37 | 0.9 | 1.26 | 1.40 | Example |
| 8 | 4.0 | 10 | 45 | 9 | 5.0 | 120 | 44 | 0.9 | 1.45 | 1.61 | Comparative Example |
| 9 | 4.5 | 35 | 25 | 10 | 2.5 | 15 | 6 | 0.9 | 1.10 | 1.22 | Example |
| 10 | 5.0 | 10 | 120 | 16 | 7.5 | 140 | 52 | 0.9 | 1.48 | 1.64 | Comparative Example |
| 11 | 5.0 | 40 | 14 | 8 | 1.8 | 5 | 2 | 0.9 | 1.06 | 1.18 | Example |

| | | | | | | | | | | | |
|---|---|---|---|---|---|---|---|---|---|---|---|
| *1 Frequency (number/mm) of crack formation in a region extending 100 µm toward a middle of an electrical steel sheet from a processed edge of the electrical steel sheet *2 Frequency (number/mm) of crack formation in a region extending toward the middle of the electrical steel sheet from a position more than 100 µm from the processed edge to a position 500 µm from the processed edge *3 Frequency of crack formation in the processed edge region/frequency of crack formation in the region excluding the processed edge *4 Total amount of shear droop on both sides of the electrical steel sheet that serves as the material of the core *5 Ratio (%) of amount of shear droop = (Total amount of shear droop/thickness of electrical steel sheet) × 100 *6 Iron loss (W/kg) of laminated core/Iron loss (W/kg) of base material | | | | | | | | | | | |

The underline indicates that the value is outside the range of the present invention.

### (Example 2)

A steel slab containing Si: 3.5 mass%, Mn: 0.09 mass%, and Al: 0.6 mass% with the balance being Fe and incidental impurities was manufactured. The steel slab was subjected to hot rolling to form a hot rolled steel sheet of 1.6 mm. Subsequently, the hot rolled steel sheet was subjected to hot band annealing at 950°C for 60 seconds and thereafter to cold rolling to form a cold rolled steel sheet having a thickness of 0.25 mm. Subsequently, the cold rolled steel sheet was subjected to final annealing under the conditions of 980°C, 10 seconds, N₂:H₂ = 90:10 (volume ratio), and a dew point of -35°C. Subsequently, a coating liquid for forming an insulating coating was applied to the surface of the steel sheet. The coating liquid contained a mixture of aluminum dichromate, an emulsion resin, and ethylene glycol. The resultant was then baked at 300°C to form an insulating coating. In this manner, an electrical steel sheet (electrical steel sheet coil) that served as the base material was manufactured.

Epstein test specimens were cut from the electrical steel sheet coil prepared as described above. One half of the test specimens were cut in a rolling direction, and the other half were cut in a direction perpendicular to the rolling direction. An iron loss W10/400 of the base material was evaluated in accordance with a method specified in JIS. In parallel with the evaluation of the base material, processing was performed on the coil. The resulting pieces of the electrical steel sheet (material of a core) having a predetermined shape were stacked to form a stator and a rotor. The stator and the rotor were assembled into a 3-phase 4-pole 24-slot distributed winding rare-earth IPM motor (rated power: 720 W).

The processing of the material of the core was processing that used a shock wave to provide pieces having a predetermined shape; the processing was laser processing performed in a state in which a water film 5 um thick was present on the surface of the steel sheet. The laminated cores (stator and rotor) were thereafter formed by rotationally stacking the pieces of the material of the core. A no-load loss of the produced motor was measured at a rotational speed of 2500 rpm with a motor characterization apparatus including a brake motor, a tachometer, a torque meter, a wattmeter, and the like.

The laser used for the processing for forming the shape of the material of the core was a nanosecond pulsed laser, which had a beam diameter of 50 um. The laser output was varied over a range of 3.0 to 8.0 kW, and the processing speed was varied over a range of 50 mpm to 120 mpm. Specific laser outputs and processing speeds are shown in Table 2. Regarding the processed material of the core (electrical steel sheet), the frequencies of crack formation in the processed edge region and the region excluding the processed edge and the total amount of shear droop on the top and bottom sides of the material of the core (electrical steel sheet) were evaluated in the manner described above.

The results are shown in Table 2. In Nos. 1, 4, 5, 6, 9, and 11, the ratio of crack formation was within the range of the present invention, and the ratio of the amount of shear droop on both sides of the electrical steel sheet was within a preferred range of the present invention; it can be seen that the degradation of the iron loss of the laminated core formed of the material of the core was inhibited. In Nos. 3, 8, and 10, the ratio of crack formation was outside the range of the present invention, and as a result, the ratio of an increase in iron loss, which is a ratio of the no-load loss of the laminated core to the iron loss of the base material, was very significant. In Nos. 2 and 7, the ratio of the amount of shear droop was outside a preferred range, whereas the ratio of crack formation was within the range of the present invention. In Nos. 2 and 7, the ratio of an increase in iron loss, which is a ratio of the no-load loss of the laminated core to the iron loss of the base material, was greater than that of those in which the ratio of crack formation was within the range of the present invention and in which the ratio of the amount of shear droop was within a preferred range of the present invention. It can be seen, however, that in Nos. 2 and 7, the ratio of an increase in iron loss was lower than that of those in which the ratio of crack formation was outside the range of the present invention.

**[Table 2]**

| No. | Laser output (KW) | Processing speed (mpm) | Frequency of crack formation in processed edge region (number/mm) ^{*1} | Frequency of crack formation in region excluding processed edge (number/mm) ^{*2} | Ratio of crack formation ^{*3} | Total amount of shear droop ^{*4} (µm) | Ratio of amount of shear droop ^{*5} (%) | Iron loss of base material (W/kg) | No-load loss of laminated core (W) | Ratio of increase in iron loss ^{*6} | Notes |
|---|---|---|---|---|---|---|---|---|---|---|---|
| 1 | 3.0 | 50 | 14 | 8 | 1.8 | 30 | 12 | 13 | 75 | 5.77 | Example |
| 2 | 3.5 | 50 | 25 | 9 | 2.8 | 80 | 32 | 13 | 100 | 7.69 | Example |
| 3 | 4.0 | 50 | 27 | 5 | 5.4 | 100 | 40 | 13 | 130 | 10.00 | Comparative Example |
| 4 | 4.5 | 80 | 14 | 8 | 1.8 | 6 | 2 | 13 | 80 | 6.15 | Example |
| 5 | 5.0 | 90 | 10 | 4 | 2.5 | 8 | 3 | 13 | 70 | 5.38 | Example |
| 6 | 6.0 | 100 | 8 | 5 | 1.6 | 5 | 2 | 13 | 79 | 6.08 | Example |
| 7 | 6.5 | 60 | 17 | 6 | 2.8 | 120 | 48 | 13 | 95 | 7.31 | Example |
| 8 | 7.0 | 50 | 38 | 4 | 9.5 | 140 | 56 | 13 | 135 | 10.38 | Comparative Example |
| 9 | 7.5 | 110 | 7 | 5 | 1.4 | 15 | 6 | 13 | 75 | 5.77 | Example |
| 10 | 8.0 | 60 | 82 | 8 | 10.3 | 140 | 56 | 13 | 137 | 10.54 | Comparative Example |
| 11 | 8.0 | 120 | 11 | 5 | 2.2 | 10 | 4 | 13 | 76 | 5.85 | Example |

| | | | | | | | | | | | |
|---|---|---|---|---|---|---|---|---|---|---|---|
| *1 Frequency (number/mm) of crack formation in a region extending 100 µm toward a middle of an electrical steel sheet from a processed edge of the electrical steel sheet *2 Frequency (number/mm) of crack formation in a region extending toward the middle of the electrical steel sheet from a position more than 100 µm from the processed edge to a position 500 µm from the processed edge *3 Frequency of crack formation in the processed edge region/frequency of crack formation in the region excluding the processed edge *4 Total amount of shear droop on both sides of the electrical steel sheet that serves as the material of the core *5 Ratio (%) of amount of shear droop = (Total amount of shear droop/thickness of electrical steel sheet) × 100 *6 No-load loss (W) of laminated core/Iron loss (W/kg) of base material | | | | | | | | | | | |

The underline indicates that the value is outside the range of the present invention.

## Claims

1. A laminated core comprising a stack of pieces of an electrical steel sheet that have a predetermined shape resulting from processing, the electrical steel sheet including an insulating coating on a surface, wherein
a frequency of formation of cracks propagating through the insulating coating in a region extending 100 um toward a middle of the electrical steel sheet from a processed edge of the electrical steel sheet is less than or equal to 3.0 times the frequency of formation of cracks propagating through the insulating coating in a region extending toward the middle of the electrical steel sheet from a position more than 100 um from the processed edge to a position 500 um from the processed edge, where the frequency is expressed as a number per mm.

2. The laminated core according to Claim 1, wherein a total amount of shear droop on both sides of the electrical steel sheet due to the processing is less than or equal to 30% of a thickness of the electrical steel sheet.
